# EUROPEAN PATENT APPLICATION

(11) **EP 4 169 696 A1**
(43) Date of publication of application: **26.04.2023**
(21) Application number: 22202199.0
(22) Date of filing: 18.10.2022
(51) Int. Cl.: B29C 51/30, B29C 51/36, B21D 37/02, B29C 33/30

(54) **KIT AND METHOD FOR MOULDING A CONTAINER**

(30) Priority: 19.10.2021 IT 202100026774
(71) Applicant: Like More Italia S.r.l., 37069 Villafranca Di Verona (VR) (IT)
(72) Inventor: MALIZIA, Roberto, Villafranca di Verona (Verona) (IT)
(74) Representative: Puggioli, Tommaso

(57) **Abstract**

Described is a kit (1) for moulding containers made of polymeric material, comprising a fixing base (10), having a plate-like shape, and a plurality of modules (11, 12, 13), which can be fixed to the fixing base (10) and configured for defining, together with each other, a mould (20) of a container to be moulded, where the mould (20) has a containment space (V). The fixing base (10) and the plurality of modules (11, 12, 13) have reciprocal fixing elements (14, 15) for determining a stable and reversible coupling between the fixing base (10) and the plurality of modules (11, 12, 13). Moreover, the base (10) and/or the modules (11, 12, 13) are designed to be connected to each other according to a plurality of different configurations and combinations in such a way that the mould (20) can adopt a plurality of different shapes and dimensions.

## Description

This invention relates to the sector of packaging products.

The invention relates to a kit and a method for moulding containers for packaging products.

From a constituent point of view, the prior art kits for moulding comprise moulds for thermoforming containers made of polymeric material.

The prior art kits, even according to their most modern implementations, still have several drawbacks of a structural, operational and economic/productive nature, which make their use not free from problems. Firstly, in effect, it is necessary to have a plurality of moulds in order to obtain containers of different shapes and sizes. In effect, each mould has a specific shape necessary to obtain a specific container. It follows that the prior art kits are not very versatile and are difficult to adapt to different operating conditions. Moreover, this feature transforms into a disadvantage from an economic point of view since it is necessary to change mould whenever a container with a shape and/or dimensions different from the previous one is to be made.

In this context, the technical purpose of the invention is to provide a kit and a method for moulding containers made of polymeric material which are free of the drawbacks of the prior art.

An aim of the invention is to provide a kit and a method for moulding containers made of polymeric material which are convenient in economic terms.

An aim of the invention is to provide a kit and a method for moulding polymeric containers which can be extremely versatile and with high performance levels.

The technical purpose indicated and the aims specified are fully achieved by a kit and a method for moulding polymeric containers according to the invention as characterised in the appended claims and/or in the description below.

In particular, the kit for moulding containers made of polymeric material comprises a fixing base, having a plate-like shape, and a plurality of modules, which can be fixed to the fixing base and configured for defining, together with each other, a mould of a container to be moulded. In particular, the mould has a containment space.

The fixing base and the plurality of modules have reciprocal fixing elements for determining a stable and reversible coupling between the fixing base and the plurality of modules.

The base and/or the modules are designed to be connected to each other according to a plurality of different configurations and combinations in such a way that the mould can adopt a plurality of different shapes and dimensions.

Advantageously, this technical feature allows the kit to be extremely versatile since, as a function of a predetermined container to be moulded, it is possible to modify the arrangement and the combination of the modules on the fixing base in such a way as to obtain the respective mould. Advantageously, this technical feature allows a thermoforming moulding to be performed which is extremely competitive from the economic point of view since it is sufficient to uncouple the modules from the fixing base and recombine them in a new operating configuration to obtain a "new" mould which can be used for making a container with a shape and/or dimensions different from the container previously made.

The invention relates to a method for moulding polymeric containers which comprises the steps of:
- preparing a kit for moulding polymeric containers;
- determining a configuration for positioning one or more products to be inserted in a respective container to be moulded;
- making a mould using the kit as a function of the predetermined arrangement configuration.

In particular, the step for producing the mould is actuated by stably applying a plurality of modules to the fixing base and defining a containment space equipped with one or more compartments for respective groups of products.

The method comprises the steps of:
- positioning a film of polymeric material in said containment space, preferably a polyester film, still more preferably a thermoplastic resin film;
- moulding by thermoforming the film of polymeric material using the above-mentioned mould in such a way as to obtain a container shaped to match a surface profile defined by the modules.

Further characteristic features and advantages of the invention will emerge more clearly from the detailed description of several preferred, but not exclusive embodiments of a kit and a method for moulding polymeric containers according to the invention.

The description is set out below with reference to the accompanying drawings which are provided solely for purposes of illustration without restricting the scope of the invention and in which:
- Figure 1 shows a schematic perspective view (by way of example but without limiting the scope of the invention) of an embodiment of a kit for moulding polymeric containers according to the invention;
- Figure 2 shows a schematic perspective view of a kit for moulding polymeric containers according to the invention;
- Figures 3, 4, 5A and 5B show schematic perspective views of components of a kit for moulding polymeric containers according to the invention;
- Figures 6 and 7 show schematic perspective views of details of a kit for moulding polymeric containers according to the invention;
- Figure 8 shows a diagram of a method for moulding a container made of polymeric material according to the invention.

With reference to the accompanying drawings, the numeral "1" denotes a kit for moulding containers made of polymeric material.

The containers obtained using this kit 1 can advantageously be used for the packaging of products having, preferably but not limited to, a substantially parallelepiped or cubic shape.

The kit 1 comprises a fixing base 10, with a plate-like shape, and a plurality of modules 11, 12, 13, which can be fixed to the fixing base 10 and configured to define, together with each other and the fixing base 10, a mould 20 of a container to be moulded. In particular, the mould 20 has a containment space "V".

The fixing base 10 may be, for example, made of aluminium or aluminium alloy preferably hard anodised.

The modules 11, 12, 13, on the other hand, may be made of aluminium or an aluminium alloy preferably hard anodised.

The fixing base 10 and the plurality of modules 11, 12, 13 have reciprocal fixing elements 14, 15 configured to determine a stable and reversible coupling between the fixing base 10 and the plurality of modules 11, 12, 13.

According to an aspect, the base 10 and/or the modules 11, 12, 13 are designed to be connected to each other according to a plurality of different configurations and combinations in such a way that the mould 20 can adopt a plurality of different shapes and dimensions.

Advantageously, this technical feature allows the kit 1 to be extremely versatile since, as a function of a predetermined container to be moulded, it is possible to modify the arrangement and the combination of the modules 11, 12, 13 on the fixing base 10 in such a way as to obtain a shape of the mould 20 which is suitable for the purpose.

Advantageously, this technical feature allows a thermoforming moulding to be performed which is extremely competitive from the economic point of view since it is sufficient to uncouple the modules 11, 12, 13 from the fixing base 10 and recombine them or combine others in a new operating configuration to obtain a "new" mould 20 which can be used for making a container with a shape and/or dimensions different from the container previously made.

The drawings illustrate by way of a non-limiting example a preferred embodiment of the kit 1.

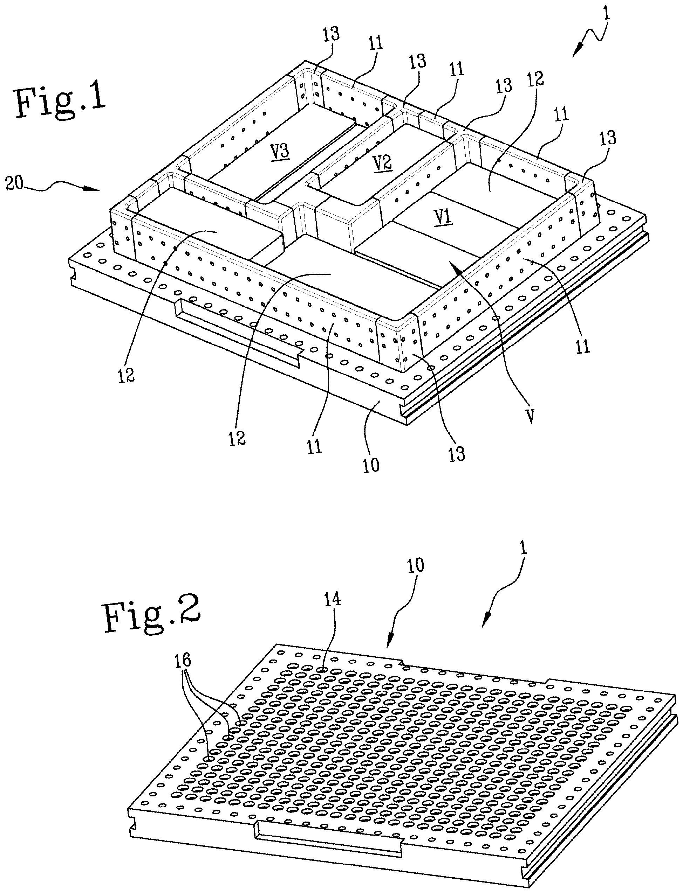

As shown in particular in Figures 1 and 2, structurally, the fixing base 10 may have, for example, a polygonal plan shape.

Preferably, the fixing base 10 has a square or rectangular plan shape. However, alternative plan shapes may be contemplated, provided they are suitable for the purpose.

Functionally, the fixing base 10 may have protuberances and/or recesses designed to determine a stable and reversible coupling with a thermoforming apparatus. For example, as will become clearer as this description continues, according to the preferred embodiment of the kit 1, it may be coupled to a pneumatic suction source.

According to another aspect of the invention, the plurality of modules 11, 12, 13 may comprise different types of modules for dimensions and/or shapes.

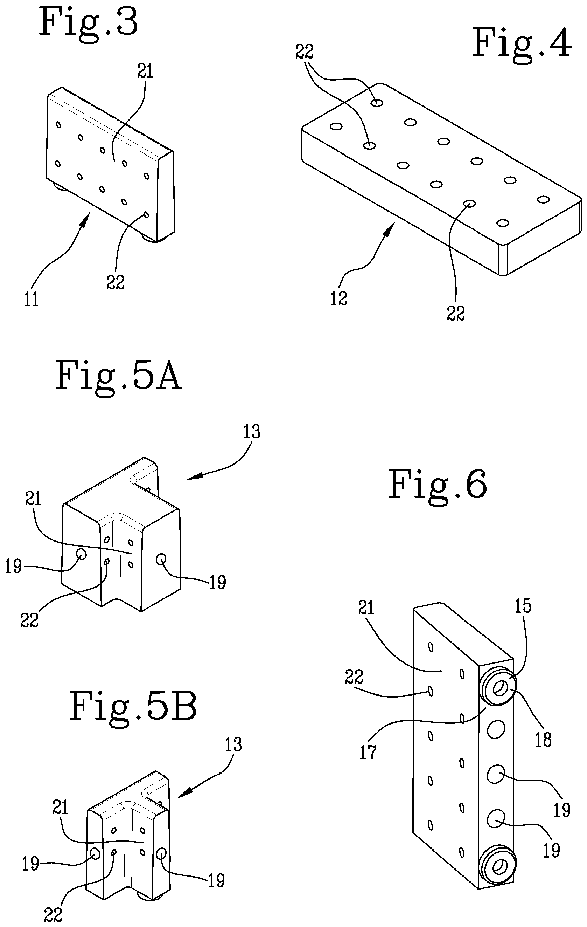

As illustrated in Figures 1 and 3, the plurality of modules 11, 12, 13 may comprise a plurality of wall modules 10 having a rectangular plan shape.

In particular, the wall modules 10 are designed to laterally delimit the containment space "V", at least partly, and/or to define a separation in compartments "V1", "V2", "V3".

The wall modules 11 delimit the spaces or seats which will house the packaged products in the final container.

In order to further improve the versatility of the kit 1 and its competitiveness from an economic point of view, at least two of the wall modules 11 have a different length.

In other words, the wall modules 11 may be grouped together in at least two sets, where each set comprises homogeneous wall modules 11, having the same length.

The term "homogeneous" means, in effect, that the wall modules 11 of the same set have the same dimensions.

Preferably, the wall modules 11 may be grouped together in a plurality of sets, wherein each set comprises wall modules 11 having a respective length.

Moreover, as illustrated in Figures 1 and 4, the plurality of modules 11, 12, 13 may comprise a plurality of bottom modules 11 having a polygonal plan shape, preferably rectangular or square, and configured for delimiting below the containment space "V".

In other words, the bottom modules 12 cover the thickness of the products to be packaged. This technical feature is particularly advantageous if containers are to be obtained wherein products having different thicknesses are positioned in such a way that the respective upper surfaces are coplanar once inserted in the respective seats. Advantageously, the container with all the products positioned in such a way as to have the upper surfaces coplanar simplifies the usual operations for upper sealing of the container.

In order to further improve the versatility of the kit 1 and its competitiveness from an economic point of view, at least two of the bottom modules 12 may have different thicknesses from each other to define respective differently raised bottom surfaces of the containment space "V". Advantageously, in this way, depending on the thickness of the product or products to be packaged, the bottom module 12 is selected with the correct thickness. In this way, it is possible to obtain a container wherein the products, even though of different thicknesses, have the respective upper surfaces lying in the same plane, that is to say, coplanar.

For example, the greater is the thickness of the product, the smaller is the thickness of the bottom module 12 used. Moreover, the smaller is the thickness of the product, the greater is the thickness of the bottom module 12 used.

More specifically, the bottom modules 12 may be grouped together in at least two sets, where each set comprises bottom modules 12 which are homogeneous, having the same thickness.

Preferably, the bottom modules 12 may be grouped together in a plurality of sets, wherein each set comprises bottom modules 12 having the same thickness.

Moreover, at least two of the bottom modules 12 may have different plan shapes and/or plan dimensions.

Advantageously, thanks to this technical feature, it is possible to make a container which has seats designed to receive products having different thickness while keeping the upper surfaces coplanar (once inserted in the container).

As illustrated in Figures 1, 5A and 5B, the plurality of modules 11, 12, 13 may comprise a plurality of connecting modules 13 configured for joining two or more wall modules 11 and/or two or more further connecting modules 13.

In particular, the connecting modules 13, together with the wall modules 11, are designed to laterally delimit the containment space "V" and/or to divide the containment space "V" into two or more separate compartments "V1", "V2", "V3".

In order to further improve the versatility of the kit 1 and its competitiveness from an economic point of view, at least two of the bottom modules 12 may have different plan shapes, as illustrated in Figures 5A and 5B.

As illustrated in Figures 1 and 2, according to one aspect, and irrespective of the shape and type of the modules 11, 12, 13 used, according to the preferred embodiment of the kit 1, the fixing base 10 may have a grid of through holes 16 connectable to the above-mentioned source of pneumatic suction, not illustrated in the accompanying drawings, for moulding a sheet of polymeric material.

According to an embodiment, as illustrated in Figure 6, each of the modules 11, 12, 13 has a lower surface or wall 17 equipped with threaded fixing holes 18, positioned on the respective lower surface 17 in such a way as to coincide, in use, with the through holes 16 of the fixing base 10. The through holes 16 and the fixing holes 18 are designed to receive respective threaded fastening members for the stable anchoring, and in the desired position, of the modules 11, 12, 13 to the fixing base 10. Preferably, the above-mentioned fixing elements 14, 15 comprise the through holes 16 and the fixing holes 18.

According to an embodiment, the fixing elements 15 comprise a pin, in which the fixing hole 18 is made, designed to be inserted in a through hole 16 of the fixing base 10.

Advantageously, this technical feature makes it possible to couple the fixing base 10 and the modules 11, 12, 13 in a stable and reversible manner and to protect from wear the components used.

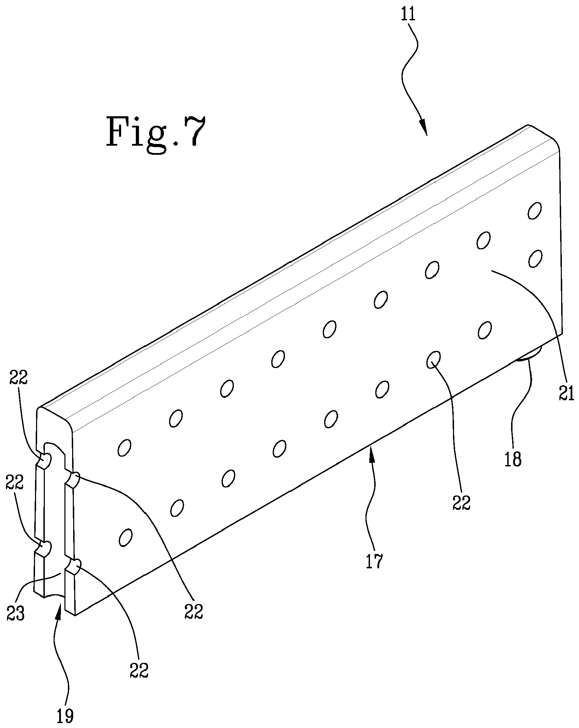

According to one aspect, as illustrated in Figures 1 and 7, irrespective of the presence of the threaded fixing holes 18, at least some of the modules 11, 12, 13 have the wall 17, or lower wall, equipped with holes 19 in such a way as to coincide, in use, with the through holes 16 of the fixing base 10, and at least one wall 21 designed to face, in use, towards the containment space "V" and equipped with second holes 22 in fluid communication with the holes 19 by means of inner ducts 23, to transmit the pneumatic suction from the fixing base 10 to the containment space "V".

Preferably, but without limiting the scope of the invention, each of the modules 11, 12, 13 has the holes 19 made in the wall 17 and the second holes 22 made on the respective walls 21 for transmitting the pneumatic suction from the fixing base 10 to the containment space.

Structurally, as shown in Figures 1 and 7, in order to guarantee optimum moulding of the container, at least some of the modules 11, 12, 13, preferably all the modules 11, 12, 13, may have second holes 22 made close to the ends of the respective walls 21 in such a way as to support the thermoforming of the container, in particular the edges of the container.

According to the same aspect, but with particular reference to the connecting modules 13, at least some of the connecting modules 13, preferably all the connecting modules 13, may have the second holes 22 made close to the respective corners, which are between two adjacent walls 21 and which, in use, face the containment space "V", in such a way as to support the thermoforming of the container, in particular the edges of the container.

Advantageously, the distribution of the second holes 22 guarantees optimum operation during moulding of the container.

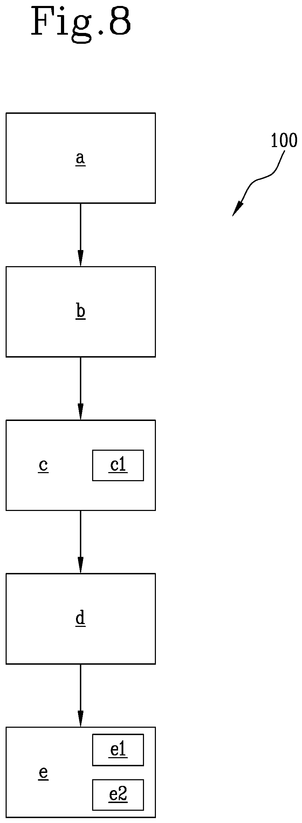

This invention also relates to a method 100 for moulding containers made of polymeric material, illustrated by way of example in Figure 8.

The method 100 comprises a preliminary step "a" in which a kit 1 is prepared having one or more of the technical features described above. The method 100 comprises a preliminary step "b" in which a configuration is determined for positioning one or more products to be inserted in a respective container to be moulded.

The method 100 comprises a preliminary step "c" in which the mould is made using the kit 1 as a function of the above-mentioned predetermined arrangement configuration. In particular, the step "c" for producing the mould is actuated by stably applying a plurality of modules 11, 12, 13 to the fixing base 10 and defining a containment space "V" equipped with one or more compartments "V1", "V2", "V3" for respective groups of products.

In particular, the preliminary step "c" may comprise a step "c1" in which a predetermined quantity of wall modules 11, bottom modules 12 and connecting modules 13 is selected as necessary to define a surface profile to be given to the container and it is preferably actuated by graphical design and simulation software.

Subsequently, the method 100 comprises a cyclical step "d" in which a film of polymeric material is positioned in the containment space "V", preferably a polyester film, still more preferably a film of thermoplastic resin.

The method 100 comprises a cyclical step "e" in which the film of polymeric material is moulded by thermoforming using the mould 20 in such a way as to obtain a container shaped to match a surface profile defined by the modules 11, 12, 13.

More specifically, the cyclic step "e" of moulding by thermoforming may comprise a sub-step "e1" wherein the film of polymeric material is brought to a forming temperature and a sub-step "e2" wherein the film of heated polymeric material is compressed against the mould 20 by pneumatic suction applied between the film and the mould 20. In particular, the pneumatic suction is fed through conduits formed in the fixing base 10 and in at least one of the modules 11, 12, 13 applied to the fixing base 10. The invention achieves the above-mentioned aims by eliminating the drawbacks of the prior art: in this regard, it should be noted firstly that the modular structure of the kit 1 as described and/or claimed allows it to be extremely versatile and advantageous from an economic point of view since it allows the mould 20 to be reconfigured as a function of the shape and size of the container to be produced using the mould 20. It is therefore not necessary to produce a plurality of separate moulds for respective containers.

It should also be noted that the particular structure of the kit 1 guarantees the possibility of combining the modules 11, 12, 13 according to countless configurations and combinations in such a way as to be able to make containers which are able to package in an optimum manner any type of product.

## Claims

1. A kit for moulding containers made of polymeric material, comprising:
- a fixing base (10), having a plate-like shape;
- a plurality of modules (11, 12, 13), fixable to the fixing base (10) and configured for defining, together with each other and with the fixing base (10), a mould (20) of a container to be moulded, said mould (20) having a containment space (V) wherein said fixing base (10) and said plurality of modules (11, 12, 13) have reciprocal fixing elements (14, 15) for determining a stable and reversible coupling between the fixing base (10) and the plurality of modules (11, 12, 13);
said base (10) and/or said modules (11, 12, 13) being designed to be connected to each other according to a plurality of different configurations and combinations in such a way that said mould (20) can adopt a plurality of different shapes and dimensions.

2. The kit according to claim 1, wherein said modules (11, 12, 13) comprise a plurality of wall modules (11), preferably having a rectangular shape in plan view; said wall modules (11) being designed to laterally delimit said containment space (V) and/or to define a separation into the containments (V1, V2, V3) in said containment space (V).

3. The kit according to claim 1 or 2, wherein said plurality of modules (11, 12, 13) comprises a plurality of bottom modules (12), having a polygonal shape, preferably rectangular or square, in plan view, and configured for delimiting below said containment space (V).

4. The kit according to claim 3, wherein at least two of said bottom modules (12) have different thicknesses to define respective bottom surfaces which are differently raised of the containment space (V).

5. The kit according to any one of claims 2 to 4, wherein said plurality of modules (11, 12, 13) comprises a plurality of connecting modules (13) configured for joining two or more wall modules (11) and/or two or more further connecting modules (13); said connecting modules (13), together with said wall modules (11), being designed to laterally delimit said containment space (V) and/or to divide said containment space (V) into two or more separate compartments (V1, V2, V3).

6. The kit according to any one of the preceding claims, wherein said fixing base (10) has a grille of through holes (16) connectable to a pneumatic suction source to perform the moulding of a sheet of polymeric material.

7. The kit according to claim 6, wherein each of the modules (11, 12, 13) has a lower surface (17) equipped with threaded fixing holes (18), positioned on the respective lower surface (17) in such a way as to coincide, in use, with the through holes (16) of the fixing base (10); said through holes (16) and said fixing holes (18) being designed to receive respective threaded fastening members for the stable anchoring, and in the desired position, of the modules (11, 12, 13) to the fixing base (10).

8. The kit according to claim 6 or 7, wherein at least some of said modules (11, 12, 13) have a first wall (17), or lower wall, designed to be, in use, facing towards the fixing base (10) and provided with first holes (19) in such a way as to coincide, in use, with the through holes (16) of the fixing base (10), and at least a second wall (21) designed to be in use facing towards the containment space (V) and provided with second holes (22) in fluid communication with said first holes (19) by means of a respective inner conduit (23), to transmit a pneumatic suction from the fixing base (10) to the containment space (V).

9. The kit (1) according to claim 8, wherein each first hole (19) is associated with a respective inner conduit (23) communicating with two or more of the respective second holes (22) preferably positioned aligned with each other along the inner conduit (23).

10. The kit (1) according to any one of the preceding claims, wherein said fixing base (10) is made of aluminium or aluminium alloy preferably hard anodized and wherein said modules (11, 12, 13) are made of aluminium or aluminium alloy preferably hard anodized.

11. A method for moulding containers made of polymeric material, comprising the steps of:
a) preparing a kit according to any one of claims 1 to 10;
b) determining a configuration for positioning one or more products to be inserted in a respective container to be moulded;
c) producing a mould (20) using said kit as a function of said predetermined position configuration, said step (c) for producing the mould (20) being actuated by stably applying a plurality of modules (11, 12, 13) to the fixing base (10) and defining a containment space (V) equipped with one or more compartments (V1, V2, V3) for respective groups of products; said method (100) comprising the following:
d) positioning a film of polymeric material in said containment space (V), preferably a polyester film, still more preferably a thermoplastic resin film;
e) moulding by thermoforming the film of polymeric material by means of said mould (20) in such a way as to obtain a container shaped to match a surface profile defined by said fixing base and by said modules (11, 12, 13).

12. The method (100) according to claim 11, wherein said step (c) of stably applying a plurality of modules (11, 12, 13) to the fixing base (10) comprises a step (c1) of selecting a quantity of wall modules (11), bottom modules (12) and connecting modules (13) to define a surface profile to be given to the container, said step (c1) of selecting a quantity of wall modules (11), bottom modules (12) and connecting modules (13) being preferably actuated by means of a graphical design and simulation software.

13. The method (100) according to claim 11 or 12, wherein said step (e) of moulding by thermoforming comprises the steps of:
e1) bringing said film of polymeric material to a forming temperature;
e2) compressing said film of heated polymeric material against said mould (20) by pneumatic suction applied between the film and the mould (20), said pneumatic suction being fed through conduits formed in the fixing base (10) and in at least one of said modules (11, 12, 13) applied to the fixing base (10).
